# EUROPEAN PATENT APPLICATION

(11) **EP 1 852 364 A1**
(43) Date of publication of application: **07.11.2007**
(21) Application number: 06113339.3
(22) Date of filing: 01.05.2006
(51) Int. Cl.: B65D 77/24, B65D 51/24

(54) **A container assembly comprising a dosing tool**

(71) Applicant: Nestec S.A., 1800 Vevey (CH)
(72) Inventor: Hahl, Michael Dietmar, 3007 Bern (CH); Pramono, Putut, 3510 Konolfingen (CH); Bachmann, Max August, 1714 Heitenried (CH); Fink, Reinhold, 3672 Oberdiessbach (CH)

(57) **Abstract**

The present invention relates to a container assembly (1) for a flowable food product (2), comprising a container (3) with a container body (4), a container body opening (5) surrounded by a peripheral, substantially horizontal, inner rim (6), a cover (7), and at least one measuring tool (8) for dosing said product (2), said measuring tool being a dosing scoop comprising a longitudinal handle (9) and a cup (10) that is movably attached to the handle so that the scoop is foldable, characterized in that the length of the handle is greater than the diameter of the container opening (5), and when the scoop is in its folded configuration, the cup is located at a distance from the middle of the handle length that is comprised between 0% to 15%, preferably 0% to 5%, of said handle length.

## Description

The present invention relates to a container assembly for a flowable food product, that comprises a measuring tool for dosing the product contained into the container.

By container it is meant any package suitable for packing a flowable product. However, for the sake of clarity, metallic cans will be described - although not meant to be restrictive - as an example of container.

Metallic cans - hereinafter referred to as "cans" - are used for various packaging purposes. One of them is storage and delivery of infant formula powders. The reason for using metallic cans is their low cost, and hygienic properties, as well as their high level of barrier properties against humidity and oxygen. Such barrier properties are highly appreciated when the contents is moisture and oxygen sensitive, like it is the case for infant formula powders for example.

Such flowable products, like powders for example, are usually packed in a can, which is closed by a lid that is seamed onto the top edges of the can, in a hygienic manner. Such infant formula powders need to be used with a dosing spoon or other similar measuring tool for reasons of safety and in order to guarantee the right nutritional benefits. Such dosing tools are usually packed into the can for convenience, so that when the consumer needs to measure a dose of the product, it is easy to use the spoon provided. Moreover, the size of the spoon is very important since it is predetermined to suit the usage instructions provided with the product. Therefore, such a dosing spoon is provided together with the product by the manufacturer to avoid misdosage by the consumer - eg. using a coffee spoon would not allow to dose properly -.

However, in the existing cans, the spoon is located into the can, that is to say, into the powder. So, the consumer has to dig into the powder and search for the spoon that is hidden inside the product.

This brings at least two disadvantages: firstly, the consumer hands are covered with powder which is clearly messy and therefore undesirable, and secondly by putting hands that are not sterile into the powder, the consumer increases the risk of hygienic problems and bacteria growth into the powder, which is obviously clearly undesirable.

Therefore, a need exists for a container assembly that can be used to pack a flowable food product, such as an infant formula powder, as well as a measuring tool, for example a scoop or a spoon, while avoiding the problems described hereinbefore.

The present invention addresses the need set out above with a container assembly for a flowable food product, comprising a container with a container body, a container body opening surrounded by a peripheral, substantially horizontal, inner rim, a cover, and at least one measuring tool for dosing said product, said measuring tool being a dosing scoop comprising a longitudinal handle and a cup that is movably attached to the handle so that the scoop is foldable.

According to the invention, the container assembly is characterized in that the length of the handle is greater than the diameter of the container opening, and when the scoop is in its folded configuration, the cup is located at a distance from the middle of the handle length that is comprised between 0% to 15%, preferably 0% to 5%, of said handle length.

In the following, description, it is considered that the can is circular, although the present invention could be applied to non-circular containers (eg. ovoid, elliptic, squarish or rectangular, etc.).

Another advantage of this configuration is that when the scoop is folded, it is easy to grab the free portion of the handle with one hand (free, i.e. not covered by the cup portion), in order to pivot the cup into unfolded position with the other hand.

In a highly preferred embodiment of the present invention, the container body opening is closed by a peelable seal. Even more preferably, the peelable seal comprises a recess oriented towards the inside of the container, and said recess is adapted in its shape and dimensions to accommodate the measuring scoop.

Surprisingly, it was found that when the scoop is in its folded position and the cup is located close to, or at the middle point of the handle length, the scoop self-centers in the recess of the peelable seal, or at least it self centers across the container body opening, and rests on the rim that surrounds the opening.

Preferably, the cup is movably attached to the handle by a pivoting hinge.

Also preferably, said cup and said handle of the measuring tool are independent parts, that comprise cooperating attachment means, for attaching said cup and said handle in a rotatable manner.

In this case, said attachment means preferably comprise an attaching hole of the cup that cooperates with a catching pin of the handle, said attaching hole of the cup further comprising a locking lever to lock the catching pin of the handle into the hole, after the pin is fully inserted into the hole.

In a preferred embodiment of the present invention, the flowable product is an infant nutrition powder.

Preferably the cup of the measuring tool comprises vents in its bottom part, so as to allow air contained in said flowable product to be drained out when said product is placed into said cup.

Also preferably, the measuring tool comprises a hole located in the region of the attachment point between said handle and said cup, in order to prevent accumulation of product in said region when product is put into the cup.

Moreover, the handle of the measuring tool advantageously comprises a means for attaching said measuring tool to a corresponding attaching means located at the inner surface of the cover.

In this latter case, the attaching means comprise a hole of the handle that cooperates with a protrusion of the inner surface of the cover.

The measuring tool preferably comprises a indented guiding rim on the top outer portion of the cup wall. Such a rim allows the consumer to better position the edge of the cup onto the edge of a container wherein the lowable products is to be poured, like for example a baby bottle.

Finally, in one embodiment, the cover comprises two portions, one flat disk-shaped cover portion, and one ring-shaped base portion onto which the cover portion can snap-fit. The ring portion is snapped onto the upper edge of the container body. In this case, the handle is preferably manufactured as an integral, detachable, part of the ring portion of the cover. At first use, the consumer detaches the handle from the cover and assembles said handle together with the cup portion of the measuring tool which is provided together in the container assembly package.

Additional features and advantages of the present invention are described in, and will be apparent from, the description of the presently preferred embodiments which are set out below with reference to the drawings in which:
Figure 1 is an schematic profile view of a container assembly according to the invention ;
Figure 2 is a profile view of a measuring tool for a container assembly as per the invention ;
Figure 3 is a schematic partial perspective view of a container assembly according to the invention, the container cover being open and the measuring tool being arranged across the container opening ;
Figure 4 is an enlarged side view of a measuring tool for a container assembly of the invention, in its unfolded configuration ;
Figure 5 is a top view, similar to figure 4 ;
Figure 6 is a bottom view, similar to figure 4 ;
Figure 7 is an enlarged side view of the handle of a measuring tool according to the invention ;
Figure 8 is a view similar to figure 7 showing the cup of the measuring tool from the top ;
Figure 9 is a schematic partial profile cut view, showing the top end of a container according to the invention, with a measuring tool in its folded configuration that is arranged across the container opening ;
Figure 10 is a similar view to figure 3, showing an alternative manufacturing process of a container and measuring tool.

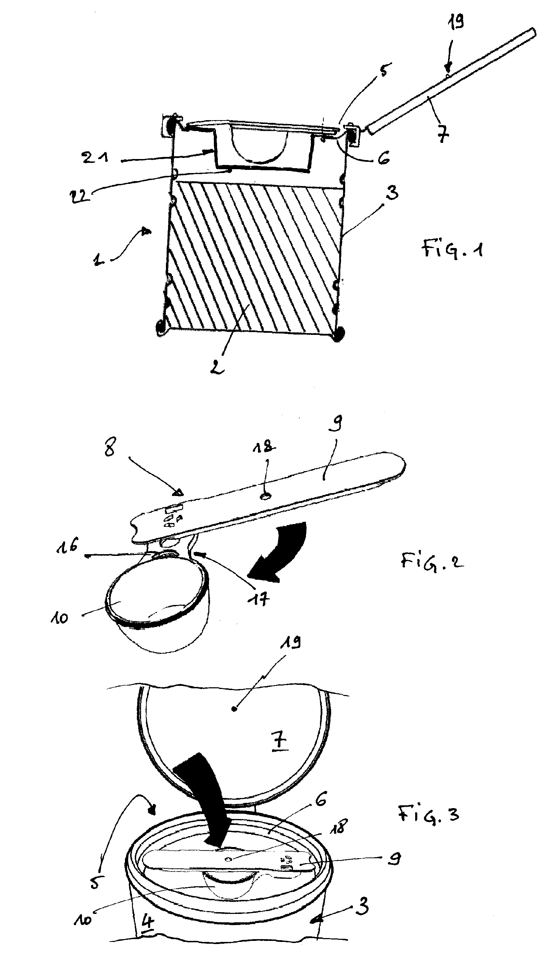

The present invention concerns a container assembly 1 for packing flowable products, particularly a powder for infant nutrition 2, which is illustrated in figure 1.

As shown in figure 1, the container assembly 1 according to the present invention comprises a container 3 with a container body 4. Said container body has a body opening 5. The container body opening 5 is surrounded by a peripheral, substantially horizontal, inner rim 6.

The container further comprises a cover like a plastic lid 7, for closing said body 4 in a removable/reclosable manner.

Furthermore, at least one measuring tool 8 for dosing said product 2 is provided in the container assembly, said measuring tool being a dosing scoop, as shown in figures 2, 4, 5 and 6.

Said dosing scoop 8 comprises a longitudinal handle 9 illustrated in figure 7 and a cup 10, illustrated in figure 8, that is movably attached to the handle 9 by a pivoting hinge 11 so that the whole scoop is foldable by horizontal rotation of the cup relative to the handle plane, as illustrated with a black arrow in figure 2.

As can be seen in figures 7 and 8, said cup 10 and said handle 9 are independent parts, that comprise cooperating attachment means, for attaching said cup and said handle in a rotatable manner (as illustrated in figure 2).

The attachment means comprise an attaching hole 12 of the cup, shown in figure 8, that cooperates with a catching pin 13 of the handle, shown in figure 7. Furthermore, the attaching hole of the cup comprises a locking lever 14 - see figure 8 - to lock the catching pin 13 of the handle 9 into the hole 12, after the pin is fully inserted into the hole, as shown in figure 6.

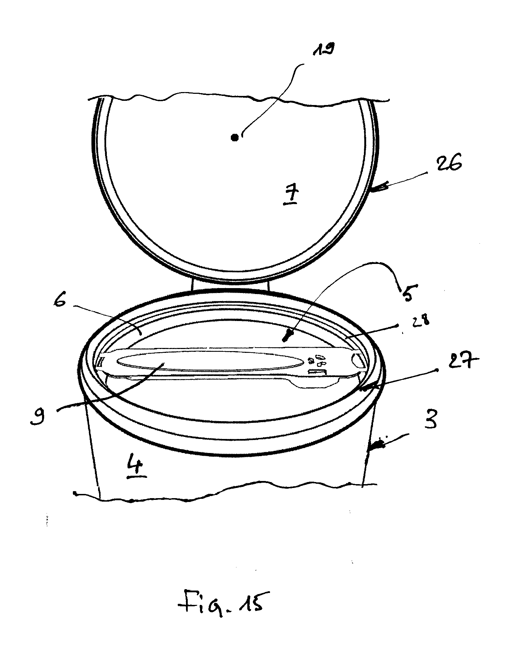

As can be seen in figures 5, 6 or 8, the cup 10 of the dosing scoop 8 comprises vents 15 in its bottom part, so as to allow air contained in said flowable product 2 to be drained out when said product is placed into said cup.

In addition to the cup vents 15, the measuring tool comprises a hole 16 located in the region of the attachment point 17 between said handle 9 and said cup 10, illustrated in figure 5, in order to prevent accumulation of product 2 in this region when the said product 2 is put into the cup 10.

In a preferred ambodiment of the invention shown in figures 1 to 3 for example, the handle 9 of the dosing scoop 8 comprises a hole 18 for attaching said dosing scoop 8 to a corresponding attaching protrusion 19 located at the inner surface of the cover 7.

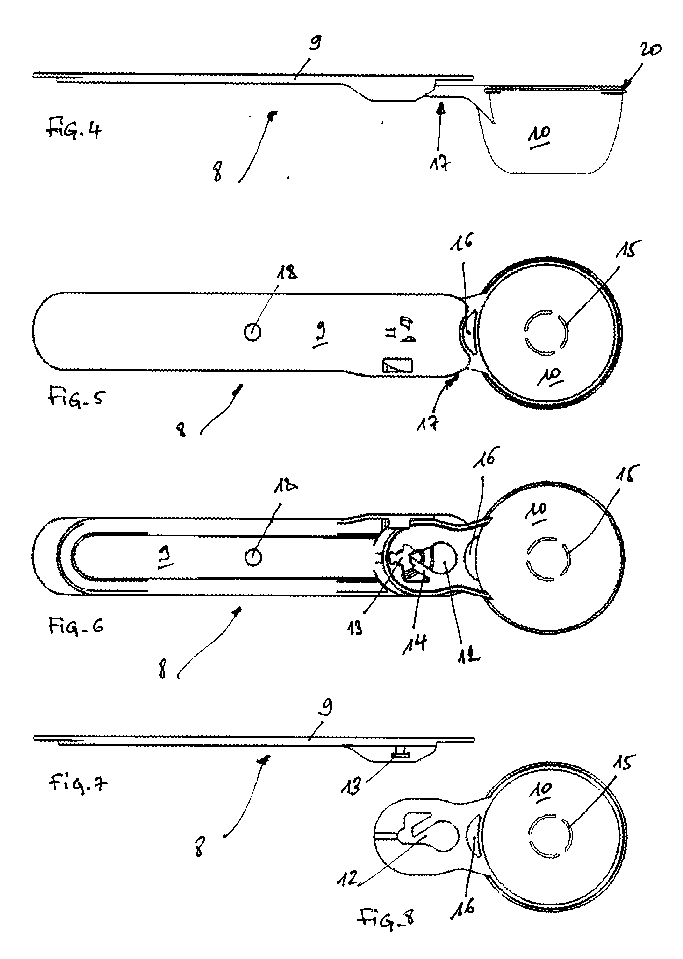

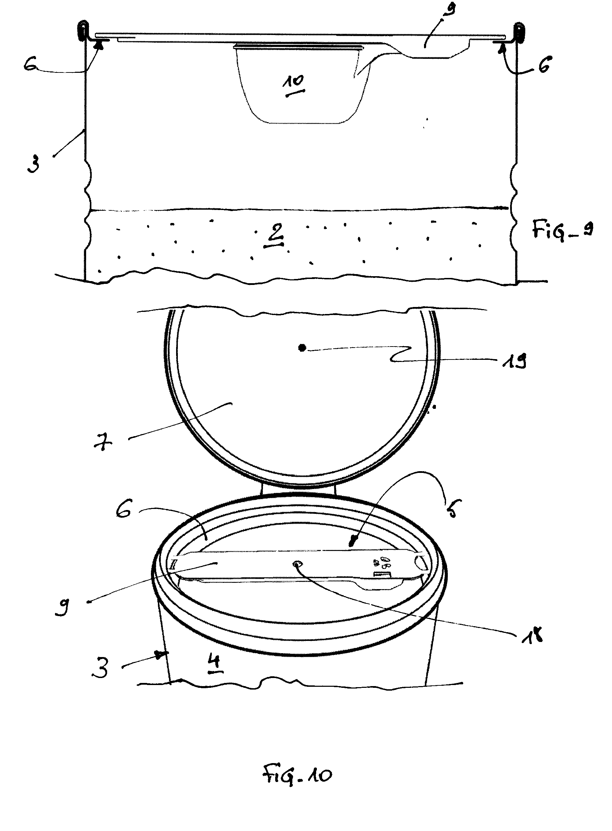

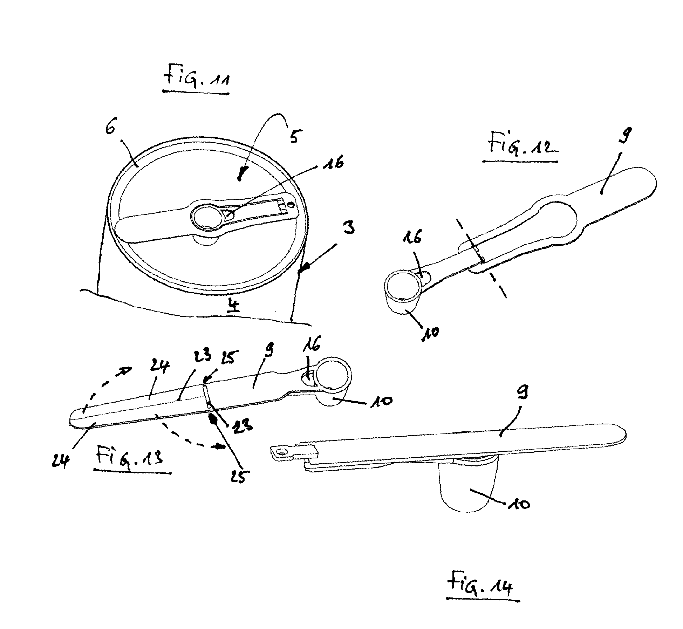

Furthermore, in order to enhance the usability of the measuring tool 8, the latter comprises a indented guiding rim 20 on the top outer portion of the cup wall, as can be seen in figures 4 and 9.

According to the present invention, the length of the handle 9 is greater than the diameter of the container opening 5, as shown in figures 3 and 9.

Moreover, when the scoop 8 is in its folded configuration as shown in figures 3 and 9, the cup 10 is located at a distance from the middle of the handle length that is comprised between 0% and 5% of said handle length. In figures 3 and 9, it can be seen that the cup 10 is positioned substantially at the middle point of the handle length, when the scoop 8 is in its folded position.

The size of the measuring tool handle 9 is such that it allows the tool 8 - when in its folded configuration - to be arranged to rest across the container opening 5, the ends of the handle 9 resting onto the rim 6 which surrounds said container opening 5. This is due to the low centre of gravity of the scoop 8. This low centre of gravity is achieved by the position of the cup 10 under the level of the handle plane.

As can be seen in figure 1 which illustrates a most preferred embodiment of the invention, the container body opening 5 is not only closed by the plastic outer lid 7 but also by a peelable aluminium seal 21.

The peelable aluminium seal 21 comprises a recess 22 oriented towards the inside of the container body 4, said recess 22 being adapted in its shape and dimensions to accommodate the measuring scoop 8.

Now, while the above description of the invention referred to one possible construction for the measuring tool 8, other constructions having the same working principle can also be envisaged, which are hereafter described in detail.

As can be seen in figure 11 and 12, the measuring scoop 8 can be made out of two different parts, which are assembled, as described above, but which are hinged so that the cup 10 can be pivoted around a horizontal axis (shown in dotted lines on figure 12). In the folded position, the top edges of the cup 10 are in the same plane as the handle 9.

As shown in figure 13, it can alternatively be made of one single piece (the cup 10 and handle 9 portions being one single part, for example made of an injection molded pastic). In this case, the handle 9 comprises two perpendicular cuts 23, which define two longitudinal portions 24 which can be pivoted by horizontal rotation around basculating points 25, as shown by dotted arrows, so that the dosing scoop can be folded.

As shown in figure 14 , the handle 9 and the cup 10 can be movably attached to one another around a horizontal axis so that when the dosing scoop is in its folded position, the handle covers the cup.

As shown in figure 10 and 15, In one embodiment of the invention, the handle 9 of the measuring tool 8 can be manufactured as an integral, detachable part of the cover 7. In the embodiment shown in figure 10, the cover 7 comprises two portions: one flat disk-shaped cover portion 26, and one ring-shaped base portion 27 onto which the cover portion 26 can snap-fit. The ring portion 27 is snapped or clipped onto the upper edge of the container body 4. In this case, the handle 9 is preferably manufactured as an integral, detachable, part of the ring portion 27 of the cover 7, as illustrated in figure 15. At first use, the consumer detaches the handle 9 from the cover 7 and assembles said handle 9 together with the cup portion 10 of the measuring tool 8 which is provided together in the container assembly package.

In the case shown in figure 15, where the handle 9 of the dosing scoop 8 is bi-injected with the ring portion of the cover, rigid plastic is used to make the basic parts of the handle, and soft plastic is coinjected, for manufacturing the soft top part of the handle as well as for making a sealing lip 28 around the rim 6 that surrounds the container opening 5.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A container assembly (1) for a flowable food product (2), comprising a container (3) with a container body (4), a container body opening (5) surrounded by a peripheral, substantially horizontal, inner rim (6), a cover (7), and at least one measuring tool (8) for dosing said product (2), said measuring tool being a dosing scoop comprising a longitudinal handle (9) and a cup (10) that is movably attached to the handle so that the scoop is foldable, **characterized in that** the length of the handle (9) is greater than the diameter of the container opening (5), and when the scoop (8) is in its folded configuration, the cup (10) is located at a distance from the middle of the handle length that is comprised between 0% to 15%, preferably 0% to 5%, of said handle length.

2. A container assembly (1) according to claim 1, wherein said container body opening (5) is closed by a peelable seal (21).

3. A container assembly (1) according to claim 2, wherein said peelable seal (21) comprises a recess (22) oriented towards the inside of the container (3), said recess (22) being adapted in its shape and dimensions to accommodate the measuring scoop (8).

4. A container assembly (1) according to any of the preceding claims, wherein said cup (10) is movably attached to the handle (9) by a pivoting hinge (11).

5. A container assembly (1) according to any of the preceding claims, wherein said cup (10) and said handle (9) of the measuring tool (8) are independent parts, that comprise cooperating attachment means (12, 13), for attaching said cup (10) and said handle (9) in a rotatable manner.

6. A container assembly (1) according to claim 5, wherein said attachment means comprise an attaching hole (12) of the cup (10) that cooperates with a catching pin (13) of the handle (9), said attaching hole (12) of the cup further comprising a locking lever (14) to lock the catching pin (13) of the handle into the hole (12), after the pin (12) is fully inserted into the hole (13).

7. A container asssembly (1) according to any of the preceding claims, wherein said flowable product (2) is an infant nutrition powder.

8. A container assembly (1) according to any of the preceding claims, wherein said cup (10) comprises vents (15) in its bottom part, so as to allow air contained in said flowable product (2) to be drained out when said product is placed into said cup.

9. A container assembly (1) according to any of the preceding claims, wherein said measuring tool (8) comprises a hole (16) located in the region of the attachment point (17) between said handle (9) and said cup (10), in order to prevent accumulation of product (2) in said region when product is put into the cup.

10. A container assembly (1) according to any of the preceding claims, wherein said handle (9) comprises a means (18) for attaching said measuring tool (8) to a corresponding attaching means (19) located at the inner surface of the cover (7).

11. A container assembly according to claim 10, wherein said attaching means comprise a hole (18) of the handle (9) that cooperates with a protrusion (19) of the inner surface of the cover (7).

12. A container assembly (1) according to any of the preceding claims, wherein said measuring tool (8) comprises a indented guiding rim (20) on the top outer portion of the cup wall.

13. A container assembly (1) according to any of the claims 4 to 12, wherein the handle (9) of the measuring tool is manufactured as an integral, detachable, part of the cover (7).
